# EUROPÄISCHE PATENTSCHRIFT

(11) **EP 1 648 066 B1**
(45) Veröffentlichungstag und Bekanntmachung des Hinweises auf die Patenterteilung: **04.07.2007**
(21) Anmeldenummer: 05015605.8
(22) Anmeldetag: 19.07.2005
(51) Int. Cl.: H02G 3/10

(54) **Aufputzmontagevorrichtung**
Surface mounting device
Dispositif de montage en surface

(30) Priorität: 14.10.2004 DE 102004049971
(43) Veröffentlichungstag der Anmeldung: 19.04.2006
(73) Patentinhaber: Insta Elektro GmbH, 58511 Lüdenscheid (DE)
(72) Erfinder: Strätner, Jochen, 58553 Halver (DE)

(56) Entgegenhaltungen:
- FR-A- 2 609 354
- GB-A- 1 033 462
- US-A- 5 518 214
- US-B1- 6 207 898

## Beschreibung

Die vorliegende Erfindung geht von einer gemäß Oberbegriff des Hauptanspruches konzipierten Vorrichtung aus.

Derartige Vorrichtungen sind dafür vorgesehen, für elektrische Installationsgeräte eine komfortable und sichere Aufputzmontage zu ermöglichen.

Eine dem Oberbegriff des Hauptanspruches entsprechende Vorrichtung ist aus der FR 2 609 354 A bekannt geworden. Diese zur Aufputzmontage eines elektrischen Installationsgerätes vorgesehenen Vorrichtung weist eine an einer Wand festlegbaren Montageplatte auf, wobei die Montageplatte zumindest ein rechtwinklig abstehendes, zapfenartig ausgebildetes Halteelement aufweist, welches in eine entsprechend ausgebildete, im Gehäuse des Installationsgerätes vorhandene, mit Haltemitteln versehene Halteöffnung eingreift. Eine solche Ausbildung der Vorrichtung bedarf jedoch einer exakten, fachgerechten Montage, damit es nicht zu Beschädigungen der Haltemittel bzw. der Vorrichtung oder des Installationsgerätes kommt.

Des weiteren ist durch die DE 81 02 481 U1 eine Vorrichtung bekannt geworden, bei der eine auf die Wand aufzuschraubende Halteplatte zum Einsatz kommt, welche seitlich abkragend mit der Außenseite des Gehäuses in Verbindung bringbare Haltewinkel aufweist. Solche seitlich am Gehäuse zur Anlage kommenden Haltewinkel benötigen jedoch einen entsprechenden Raum außerhalb des Gehäuses, welcher nicht immer zur Verfügung steht. Außerdem treten solche seitlich am Gehäuse zur Anlage kommenden Haltewinkel optisch hervor, wenn diese nicht durch ein zusätzliches Designteil abgedeckt werden.

Zudem ist durch die GB 1 033 462 A eine Abdeckung für elektrische Schalter bekannt geworden, wobei die Abdeckung als Gummistopfen ausgebildete Haltemittel aufweist, die zur Festlegung der Abdeckung am Schalter mit an diesem angebrachten vorhandenen Haltezapfen zusammenwirken.

Außerdem ist es aus der US 6 207 898 B1 und aus der US 5 518 214 A bekannt, die der Wand zugeordnete Rückseite der Montageplatte einer solchen Vorrichtung mit einem Klebefeld zu versehen.

Der vorliegenden Erfindung liegt deshalb die Aufgabe zugrunde, eine Vorrichtung zur Aufputzmontage von elektrischen Installationsgeräten zu schaffen, die eine Befestigung im inneren des Gehäuses des elektrischen Installationsgerätes erlaubt und welche nach der Montage des Installationsgerätes vollständig von diesem verdeckt ist, und durch welche zudem gewährleistet ist, dass selbst ein unfachmännisches, schräges Aufstecken bzw. schräges Abnehmen des elektrischen Installationsgerätes problemlos, ohne Beschädigungen zu verursachen möglich ist.

Erfindungsgemäß wird diese Aufgabe durch die im Hauptanspruch angegebenen Merkmale gelöst.

Bei einer solchen Ausbildung ist besonders vorteilhaft, dass auf besonders kostengünstige Art und Weise eine komfortable und sichere Möglichkeit zur Aufputzmontage von elektrischen Installationsgeräten realisiert ist.

Weitere vorteilhafte Ausgestaltungen des erfindungsgemäßen Gegenstandes sind in den Unteransprüchen angegeben. Anhand eines Ausführungsbeispiels sei die Erfindung im Prinzip näher erläutert. Dabei zeigen:
- Fig. 1:: das elektrische Installationsgerät in Zuordnung der in die Halteöffnungen einzusetzenden Haltemittel;
- Fig. 2:: die Montageplatte im Vollschnitt.

Wie aus den Figuren hervorgeht, besteht eine solche, für eine Aufputzmontage vorgesehene Vorrichtung im Wesentlichen aus einem das elektrische Installationsgerät 1 aufnehmenden Gehäuse 2 und einer an einer Wand W festlegbaren Montageplatte 3.

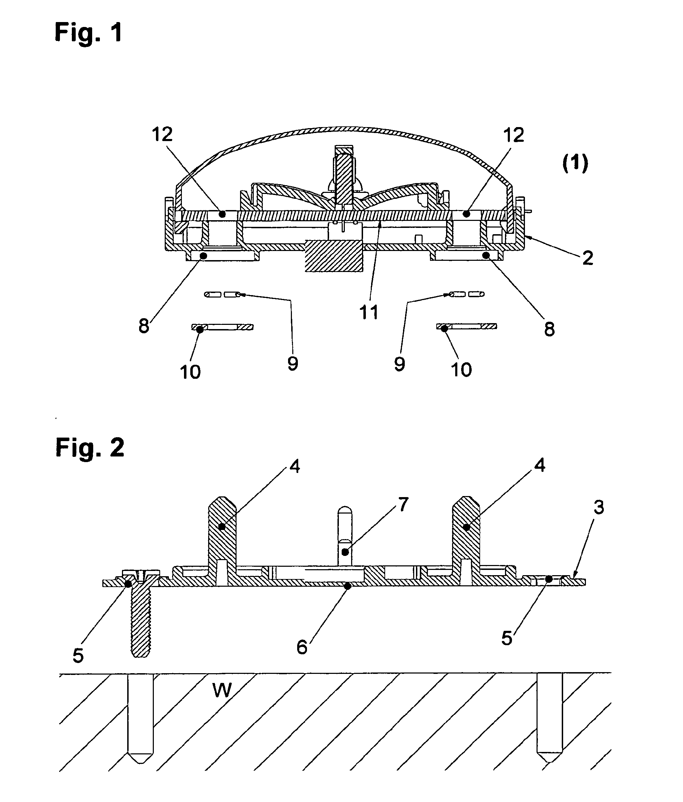

Wie insbesondere aus Figur 2 hervorgeht, ist die an der Wand W festlegbare Montageplatte 3 einstückig mit zwei zapfenartig ausgebildeten Halteelementen 4 versehen. Außerdem weist die Montageplatte 3 zwei Befestigungsöffnungen 5 auf, damit diese auf einfache Art und Weise positionsgenau an die Wand W angeschraubt werden kann. Sollte ein Anschrauben der Montageplatte 3 nicht möglich sein, weil die Wand W bzw. der Träger z.B. aus Glas besteht, kann diese auch einfach angeklebt werden. Zu diesem Zweck ist die Rückseite der Montageplatte 3 mit einem Klebefeld 6 versehen, welches bei Bedarf mit einem Klebestreifen bestückt werden kann. Ein an die Montageplatte 3 angeformtes, stiftartig ausgebildetes Codierelement 7, ermöglicht auf einfache Art und Weise eine sichere lagegerechte Montage des elektrischen Installationsgerätes 1.

Wie insbesondere aus Figur 1 hervorgeht, ist das elektrische Installationsgerät 1 als Bewegungsmelder ausgeführt. Selbstverständlich ist unter Zuhilfenahme einer solchen Montageplatte 3 ohne weiteres auch die Aufputzmontage andersartig ausgeführter elektrischer Installationsgeräte 1 (Schalter, Brandmelder, Temperaturwächter, Leuchten usw.) auf besonders einfache Art und Weise möglich. Das Gehäuse 2 des elektrischen Installationsgerätes 1 weist zu diesem Zweck zwei Halteöffnungen 8 auf, in die jeweils ein als Ringfederelement ausgebildetes Haltemittel 9 eingesetzt ist. Als Verlierschutz ist in jeder der beiden Halteöffnungen 8 eine Abschlussscheibe 10 festgelegt. Durch verkleben, verschweißen, verbördeln usw. werden die beiden Abschlussscheiben 10 fest mit dem Endbereich der jeweiligen Halteöffnung 8 verbunden. Die als Ringfederelement ausgebildeten Haltemittel 9 sind dadurch mit Spiel sicher im mittleren Bereich der jeweiligen Halteöffnung 8 aufgenommen. Um eine große Eintauchtiefe für die beiden zapfenartigen Halteelemente 4 zu gewährleisten, ist die im Innenraum des Gehäuses 2 untergebrachte Leiterplatte 11 an zwei entsprechenden Stellen mit einer Durchtrittsöffnung 12 versehen.

Auf einfache Art und Weise ist somit eine Vorrichtung zur Aufputzmontage von elektrischen Installationsgeräten 1 realisiert, die bei kompakter raumsparender Ausführung nur im Innenraum des Gehäuses 2 des elektrischen Installationsgerätes 1 zur Wirkung kommt, bzw. nach der Montage von diesem vollständig verdeckt angeordnet ist. Ein zusätzliches Designteil zur Abdeckung ist somit nicht notwendig. Besonders vorteilhaft ist dabei, dass selbst ein unfachmännisches, schräges Aufstecken bzw. schräges Abnehmen des elektrischen Installationsgerätes 1 auf die bzw. von der Montageplatte 3 problemlos möglich ist, also nicht zu Beschädigungen führt.

## Patentansprüche

1. Vorrichtung zur Aufputzmontage eines elektrischen Installationsgerätes mit einer an der Wand festlegbaren Montageplatte (3), wobei die Montageplatte (3) zumindest ein rechtwinklig abstehendes, zapfenartig ausgebildetes Halteelement (4) aufweist, welches in eine entsprechend ausgebildete, im Gehäuse (2) des Installationsgerätes (1) vorhandene, mit Haltemitteln (9) versehene Halteöffnung (8) eingreift, **dadurch gekennzeichnet, dass** zumindest ein Haltemittel (9) als ein in eine Halteöffnung (8) einlegbares Ringfederelement ausgeführt ist, und dass dem Endbereich der Halteöffnung (8) eine als Verlierschutz dienende Abschlussscheibe (10) derart zugeordnet ist, so dass das als Ringfeder ausgebildete Haltemittel (9) mit Spiel sicher im mittleren Bereich der Halteöffnung (8) aufgenommen ist.

2. Vorrichtung nach Anspruch 1, **dadurch gekennzeichnet, dass** die Montageplatte (3) zumindest ein mit dem Gehäuse (2) in Eingriff kommendes Codierelement (7) aufweist.

3. Vorrichtung nach einem der Ansprüche 1 oder 2, **dadurch gekennzeichnet, dass** die Montageplatte (3) zumindest eine Befestigungsöffnung (5) aufweist.

4. Vorrichtung nach einem der Ansprüche 1 bis 3, **dadurch gekennzeichnet, dass** die Montageplatte (3) an ihrer, der Wand (W) zugeordneten Rückseite zumindest ein Klebefeld (6) aufweist.

5. Vorrichtung nach einem der Ansprüche 1 bis 4, **dadurch gekennzeichnet, dass** zumindest ein in der Halteöffnung (8) des Gehäuses (2) befindliches Haltemittel (9) als Gummistopfen ausgebildet ist.

## Claims

1. Apparatus for the surface mounting of electrical installation equipment with a mounting plate (3) that can be affixed to the wall, with the mounting plate (3) featuring at least one retention element (4) of a pin-like design protruding at right angles and engaging in an appropriately designed retention aperture (8) which is provided in the receptacle of the electrical installation equipment (1) and is equipped with retention constituents (9), **characterised by** the fact that at least one retention constituent (9) is executed as an annular spring element that can be inserted into a retention aperture (8) and that an end disk (10) serving to protect against loss is assigned to the end zone of the retention aperture (8) in such a manner that the retention constituent (9) designed as an annular spring is securely accommodated in a floating manner in the middle zone of the retention aperture (8).

2. Apparatus in accordance with Claim 1, **characterised by** the fact that the mounting plate (3) shows a coding component (7) that meshes with the receptacle (2).

3. Apparatus in accordance with Claim 1 or Claim 2, **characterised by** the fact that the mounting plate (3) shows at least one attachment opening (5).

4. Apparatus in accordance with any of Claims 1 to 3, **characterised by** the fact that the mounting plate (3) shows at least one adhesive area (6) on its reverse side assigned to the wall (W).

5. Apparatus in accordance with any of Claims 1 to 4, **characterised by** the fact that at least one retention constituent (9) provided in the retention aperture (8) of the receptacle (2) is designed as a rubber bung.

## Revendications

1. Dispositif pour montage en saillie d'un appareil d'installation électrique avec une plaque de montage fixable au mur (3), pour lequel la plaque de montage (3) présente au moins un élément de maintien (4) dépassant perpendiculairement, en forme de pivot, qui se prend dans une ouverture de maintien (8), de configuration adaptée, se trouvant dans le boîtier (2) de l'appareil d'installation (1) et dotée de moyens de retenue (9), **caractérisé par le fait qu'**au moins un moyen de retenue (9) est configuré comme un élément à ressort-bague insérable dans une ouverture de retenue (8) et que, dans la zone finale de l'ouverture de retenue (8), une rondelle d'obturation (10) servant de protection contre la perte est disposée de telle sorte que le moyen de retenue (9) configuré comme un ressort-bague est logé fiablement avec du jeu dans la zone médiane de l'ouverture de retenue (8).

2. Dispositif selon revendication 1, **caractérisé par le fait que** la plaque de montage (3) présente au moins un élément de codage (7) s'engrenant avec le boîtier (2).

3. Dispositif selon l'une des revendications 1 ou 2, **caractérisé par le fait que** la plaque de montage (3) présente au moins une ouverture de fixation (5).

4. Dispositif selon l'une des revendications 1 à 3, **caractérisé par le fait que** la plaque de montage (3) présente au moins une zone de collage (6) sur la partie arrière tournée vers le mur (W).

5. Dispositif selon l'une des revendications 1 à 4, **caractérisé par le fait qu'**au moins un moyen de retenue (9) se trouvant dans l'ouverture de retenue (8) du boîtier (2) est configuré comme un bouchon en caoutchouc.
